# EUROPEAN PATENT SPECIFICATION

(11) **EP 3 429 065 B1**
(45) Date of publication and mention of the grant of the patent: **08.01.2020**
(21) Application number: 18182445.9
(22) Date of filing: 09.07.2018
(51) Int. Cl.: H02K 5/10, E04F 10/10, E06B 7/086, H02K 5/22, H02K 7/00, H02K 7/06, H02K 7/116, H02K 11/33

(54) **SCREENING DEVICE WITH ADJUSTABLE SLATS**
SCHUTZVORRICHTUNG MIT VERSTELLBAREN LAMELLEN
DISPOSITIF DE PROTECTION AVEC LAMELLES RÉGLABLES

(30) Priority: 14.07.2017 IT 201700079738
(43) Date of publication of application: 16.01.2019
(73) Proprietor: Topp Srl a socio unico, 36066 Sandrigo (VI) (IT)
(72) Inventor: STEFANOU, Ath. Theodoros, 15771 Athens (GR); CAVALCANTE, Toni, 36031 Vicenza (IT)
(74) Representative: De Giorgi, Michele

(56) References cited:
- CN-U- 203 967 898
- JP-A- S6 477 442
- JP-A- 2012 244 858
- Ucs Ultraflex Control Systems: "Ultraflex Control Systems window remote control and automation systems.", , 19 June 2016 (2016-06-19), XP055460628, Retrieved from the Internet: URL:https://web.archive.org/web/2016061909 2309/http://ucs.ultraflexgroup.com:80/easy News/NewsLeggi.asp?NewsID=69&t=5 [retrieved on 2018-03-19]

## Description

The present invention concerns a screening device with adjustable slats.

In particular, the present invention relates to a device for covering external surfaces of buildings, and in particular of facades, by means of adjustable slats.

This device can also be used to open and close outside windows and shutters that are difficult to access, such as church glazing or windows of industrial complexes.

In some possible embodiments of the present invention, the slats will be configured so that they can be partially closed by overlapping one another, in order to create a wall that is also resistant to bad weather and possibly waterproof if seals are also provided between the slats.

In other embodiments, the slats can be used only to shade or partially shield from wind or bad weather.

The present invention therefore lies within the field of building structures.

Today, in the field of devices for covering external surfaces, devices are known which are equipped with a plurality of slats that are intended to be fixed for example to the facade of a building in order to shade it or, in general, to shield it from bad weather. The slats can be adjusted in relation to the surface in order to modify the portion thereof that is covered by each slat.

Structurally, these known devices comprise a frame that can be fixed to the surface to be covered and to which a plurality of slats is fixed that are rotatably hinged to the frame in relation to respective parallel axes of rotation.

Linear actuators have one end fixed to the frame and the other end to the slat so as to rotate the slat in relation to the frame when the actuator is activated.

These actuators have a casing that houses an electric motor, a spindle and a mechanical transmission connected to the shaft of the motor and to the spindle, so as to transform the rotary motion of the shaft of the motor into a linear motion of the shaft.

The casing has an outer wall provided with a hole through which the spindle passes, which spindle can be extended or pulled back in relation to the casing in order to rotate the slats.

A seal is placed in the hole and passed through by the spindle.

The purpose of this seal is to allow the spindle to slide in the hole while at the same time preventing dirt and humidity from entering the casing.

However, this solution is inefficient and the currently known devices for covering external surfaces by means of slats tend to have a relatively short-lived efficiency due to the humidity and dirt that penetrates the casing of the actuators, compromising their operation or causing them to fail, possibly as a result of a short circuit of the electric motor.

Moreover, a traditional device with adjustable slats, according to the preamble of claim 1, is described in "Ultraflex Control Systems window remote control and automation systems", 19 June 2016, on the website: http://ucs.ultraflexgroup.com:80/easyNews/NewsLeggi.asp?NewsID=69&t=5.

The problem that lies at the heart of the present invention is that of increasing the efficient service life of currently known devices for covering surfaces by means of adjustable slats.

The main task of the present invention consists in creating a screening device with adjustable slats that provides a solution to this problem by resolving the reported drawbacks of the above-described devices.

Within the remit of this task, the aim of the present invention is to propose a screening device with adjustable slats that has a greater resistance to bad weather and to dirt than traditional devices.

Another aim of the present invention consists in creating a screening device with adjustable slats that is capable of remaining efficient in harsher environmental conditions compared to traditional devices.

Yet another aim of the invention consists in proposing a screening device with adjustable slats that is structurally simple and easy to install.

This task, as well as these and other aims that will emerge more clearly below, is achieved by a screening device with adjustable slats according to the accompanying claim 1.

Detailed characteristics of a screening device with adjustable slats according to the invention are given in the corresponding dependent claims.

Further features and advantages of the invention will emerge more clearly from the description of a preferred, but not exclusive, embodiment of a screening device with adjustable slats according to the invention, given by way of non-restrictive example in the accompanying drawings, in which:
- Figure 1 shows a screening device with adjustable slats according to the invention in a side elevation;
- Figure 2 shows an actuator of a screening device with adjustable slats according to the present invention in a perspective view with some parts removed to better show other parts thereof;

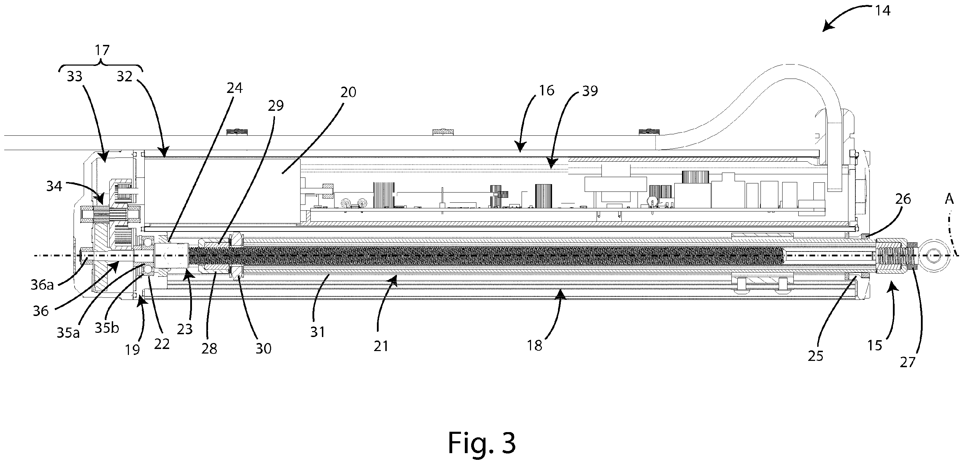

- Figure 3 shows the actuator in Figure 2 in longitudinal cross-section;
- Figure 4 is a detail of a variation of the actuator shown in Figures 2 and 3 in perspective view.

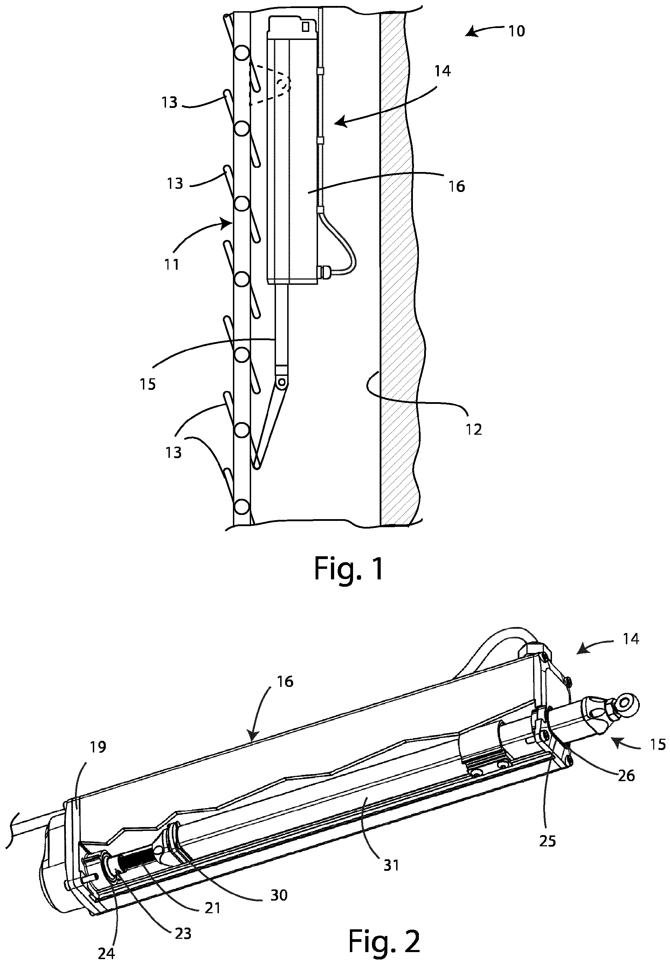

With particular reference to the above Figures, reference numeral 10 shows as a whole a screening device with adjustable slats which, in a conventional manner, comprises:
- a frame 11 that can be fixed to a surface 12 of a wall of a building;
- a series of slats 13, each extending along a longitudinal axis which, in the example in Figure 1, is perpendicular to the drawing plane; each slat 13 is fixed to the frame 11 such that it can rotate about its own longitudinal axis;
- a linear actuator 14 having a spindle 15 connected to at least one of the slats 13.

The linear actuator 14 can be operated so as to rotate the slat 13 about its own longitudinal axis.

The following description describes an embodiment of the present invention where the spindle 15 is connected directly to a single slat 13 to which the other slats 13 are kinematically connected in order to be rotated in a coordinated manner by the linear actuator 14 by means of a kinematic mechanism, which is not shown in the accompanying Figures but is of conventional design.

Clearly, in different embodiments of the present invention, the spindle 15 can be connected at the same time to a plurality of slats 13 and/or several linear actuators 14 can be provided, each connected to a slat 13 or to a plurality of slats 13 in order to cause them to rotate.

According to the present invention, the device 10 has a particular distinctive feature in that the linear actuator 14 comprises:
- a housing 16 having within it a first compartment 17 and a second compartment 18 mutually separated by a wall 19;
- an electric motor 20 housed in the first compartment 17;
- a screw member 21 rotatably housed in the second compartment 18 about an operating axis A and connected to the electric motor 20 so as to be rotated about the operating axis A.

The spindle 15 is connected to the screw member 21 so that a rotation of the screw member 21 is followed by a translation of the spindle 15 along the operating axis A. The wall 19 has a hole 22 and the screw member 21 is fixed to a connector 23, which is preferably cylindrical, inserted into the hole 22.

The linear actuator 14 also comprises a main sealing element 24 fixed to the connector 23, which engages in the hole 22 so as to rotate therein.

The main sealing element 24 is designed so as to prevent the passage of liquids and dirt between the hole 22 and the connector 23 and advantageously is composed of a sealing ring commercially known as Corteco®.

The main seal 24 substantially creates a watertight seal between the connector 23 of the screw member 21 and the wall 19 so as to protect the electric motor 20 that is housed in the first compartment 17 and the electronic control components of the electric motor 20 that are preferably also housed in the first compartment 17 against infiltrations of liquid and dirt.

In this way, being located inside the second compartment 18, the main sealing element 24 already has greater protection from water and dirt compared to the seal between the spindle and casing of traditional devices.

Furthermore, in this way, the main sealing element 24 is also protected from sunlight that would cause it to age prematurely.

Thus, a device 10 according to the present invention is more reliable and long lasting than traditional devices.

In Figure 1, the linear actuator 14 is shown in a position parallel to the frame 11 that bears the slats 13, and in alternative embodiments of the present invention, depending on contingent needs, the linear actuator can clearly be arranged upside down or positioned at 90° with respect to the position shown by way of example in Figure 1.

Preferably, the device 10 has the housing 16 of the linear actuator 14 provided with an opening 25 that places the second compartment 18 in communication with the outside of the housing 16.

The spindle 15 extends through the opening 25 and, advantageously, the device 10 comprises at least one secondary sealing element 26 housed in the opening 26 and coupled to the spindle 15, said secondary sealing element 26 being intended to prevent the entry of liquids and dirt into said second compartment 18 through said opening 25.

Advantageously, the spindle 15 has:
- an external end 27 configured to be kinematically connected to the slat 13;
- an internal end 28 provided with a female screw element 29 coupled to the screw member 21 so that a rotation of the screw member 21 results in a translation of the spindle 15;
- a slider 30 coupled to the second compartment 18 so that the slider 30 can slide along the operating axis A and its rotation about the operating axis A is prevented by the interaction between the slider 30 and an internal wall of the second compartment 18.

In order to protect the screw member 21 from becoming dirty, the spindle 15 advantageously comprises a liner 31 that encloses an internal cavity into which the screw member 21 is slidably inserted.

The first compartment 17 preferably comprises:
- a first chamber 32 that extends in a direction parallel to the operating axis A, is located alongside the second compartment 18 and houses the electric motor 20;
- a second chamber 33 that extends perpendicularly to the operating axis A, is in communication with the first chamber 32 and with the second compartment 18 by means of the hole 22.

The device 10 preferably comprises a mechanical transmission 34 that is housed in the second chamber 33 and connected to the electric motor 20 and to the screw member 21 in order to transmit motion from the electric motor 20 to the screw member 21.

The linear actuator 14 advantageously comprises a bearing 35 having an external element 35a fixed inside the hole 22 and an internal element 35b fixed to said screw member 21; said internal element 35b being rotatable in relation to said external element 35a about said operating axis A.

The bearing 35 is advantageously located alongside the main sealing element 24 preferably on its side inside the second chamber 33, the connector 23 advantageously constitutes a terminal of a shaft 36 that extends coaxially to the operating axis A and is coupled to the internal element 35b in order to be guided in rotation about the operating axis A.

Advantageously, the shaft 36 has an end 36a rotatably supported by the housing 16 for structural stability.

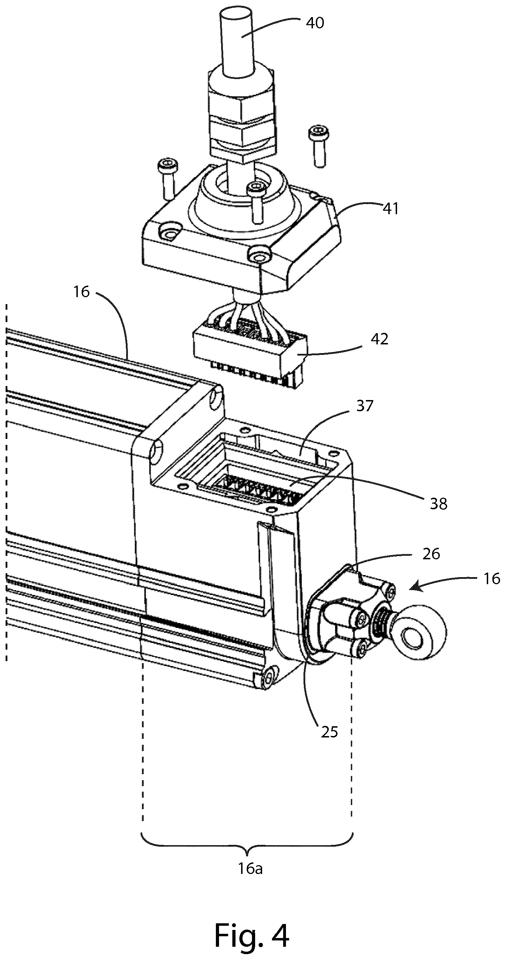

In a particularly advantageous embodiment, shown by way of example in Figure 4, the housing 16 is shaped so as to have a seat 37 for a socket 38 provided with connectors connected to the electric motor 20 and/or to an electronic device 39 that can activate the electric motor 20.

Preferably, the housing 16 comprises a terminal component 16a that is provided with the seat 37 as well as the opening 25.

The device 10 advantageously comprises a supply cable 40 provided with a cover 41 that can be fixed to the housing 16 in order to cover the seat 37 and provided with a plug 42 shaped so as to couple to the socket 38.

In this way, the installation and maintenance of the device 10 is particularly easy and quick.

In a preferred embodiment, not shown in the accompanying Figures, the housing 16 is provided with at least one drainage opening that places the second compartment 18 in communication with the outside of the housing.

This at least one drainage opening is advantageously positioned and designed so as to facilitate the exit of liquid from the second compartment 18 while preventing the entry therein of dirt or water.

Generally, said at least one drainage opening is positioned and designed in order to allow water to exit the second compartment 18 so that, in the event of failure of the secondary sealing element 26, if provided, the accumulation of liquid in the second compartment 18 is prevented.

The invention thus conceived can undergo numerous modifications and variations, all falling within the scope of protection of the accompanying claims.

Furthermore, all of the parts can be replaced by other technically equivalent elements.

In practice, the materials used, as well as the contingent forms and dimensions, can be varied according to contingent needs and the state of the art.

Where the structural characteristics and techniques mentioned in the following claims are followed by reference signs or numerals, these reference signs or numerals have been applied for the sole purpose of increasing the comprehensibility of said claims and, consequently, they in no way constitute a limitation to the interpretation of each element identified, purely by way of example, by said reference signs or numerals.

## Claims

1. Device (10) with adjustable slats (13) to cover external surfaces of buildings, said device comprising:
- a frame (11) that can be fixed to a surface (12) of a wall (19) of a building;
- a series of slats (13), each extending along a longitudinal axis and rotatably fixed to said frame (11) about said longitudinal axis;
- a linear actuator (14) having a spindle (15) connected to at least one slat (13) of said slats (13); said linear actuator (14) being operable so as to rotate said at least one slat (13) about its own longitudinal axis;
**characterised in that** said linear actuator (14) comprises:
- a housing (16) having within it a first compartment (17) and a second compartment (18) mutually separated by a wall (19);
- an electric motor (20) housed in said first compartment (17);
- a screw member (21) rotatably housed in said second compartment (18) about an operating axis (A) and connected to said electric motor (20) so as to be rotated about said operating axis (A); said spindle (15) being connected to said screw member (21) so that a rotation of said screw member (21) is followed by a translation of said spindle (15) along said operating axis (A); said wall (19) having a hole (22) and said screw member (21) being fixed to a connector (23) inserted into said hole (22);
- a main sealing element (24) fixed to said hole (22) and to said connector (23) and designed so as to prevent the passage of liquids and dirt between said hole (22) and said connector (23).

2. Device (10) according to claim 1, **characterised in that** said housing (16) has an opening (25) that places said second compartment (18) in communication with the outside of said housing (16); said spindle (15) extending through said opening (25); said device (10) comprising a secondary sealing element (26) housed in said opening (25) and coupled to said spindle (15), said secondary sealing element (26) serving to prevent the entry of liquids and dirt into said second compartment (18) through said opening (25).

3. Device (10) according to any one of the preceding claims, **characterised in that** said spindle (15) has:
- an external end (27) configured to be kinematically connected to said at least one slat (13);
- an internal end (28) provided with a female screw element (29) coupled to said screw member (21) so that a rotation of said screw member (21) results in a translation of said spindle (15);
- a slider (30) coupled to said second compartment (18) so that said slider (30) can slide along said operating axis (A) and its rotation about said operating axis (A) is prevented.

4. Device (10) according to any one of the preceding claims, **characterised in that** said spindle (15) comprises a liner (31) that encloses an internal cavity into which said screw member (21) is slidably inserted.

5. Device (10) according to any one of the preceding claims, **characterised in that** said compartment (17) comprises:
- a first chamber (32) that extends in a direction parallel to said operating axis (A), is located alongside said second compartment (18) and houses said electric motor (20);
- a second chamber (33) that extends perpendicularly to said operating axis (A), is in communication with said first chamber (32) and with said second compartment (18) by means of said hole (22);
said device 10 comprising a mechanical transmission (34) housed in said second chamber (33) and connected to said electric motor (20) and to said screw member (21) in order to transmit motion from said electric motor (20) to said screw member (21).

6. Device (10) according to any one of the preceding claims, **characterised in that** it comprises a bearing (35) having an external element (35a) fixed inside said hole (22) and an internal element (35b) fixed to said screw member (21); said internal element (35b) being rotatable in relation to said external element (35a) about said operating axis (A).

7. Device (10) according to claim 6, **characterised in that** said bearing (35) is located alongside said main sealing element (24), said connector (23) forming a terminal of a shaft (36) that extends along said operating axis (A) and is connected to said internal element (35b) in order to be guided in rotation about said operating axis (A).

## Patentansprüche

1. Vorrichtung (10) mit einstellbaren Lamellen (13) zum Abdecken von Außenflächen von Gebäuden, wobei die Vorrichtung umfasst:
- einen Rahmen (11), der an einer Oberfläche (12) einer Wand (19) eines Gebäudes befestigbar ist;
- eine Reihe von Lamellen (13), die sich jeweils entlang einer Längsachse erstrecken und am Rahmen (11) um die Längsachse drehbar befestigt sind;
- einen Linearantrieb (14) mit einer Spindel (15), die mit zumindest einer Lamelle (13) der Lamellen (13) verbunden ist; wobei der Linearantrieb (14) zum Drehen der zumindest einen Lamelle (13) um deren eigene Längsachse betätigbar ist;
**dadurch gekennzeichnet, dass** der Linearantrieb (14) umfasst:
- ein Gehäuse (16) in dem ein erster Innenraum (17) und ein zweiter Innenraum (18) angeordnet sind, die durch eine Wand (19) voneinander getrennt sind;
- einen Elektromotor (20), der im ersten Innenraum (17) untergebracht ist;
- ein Schraubenelement (21), das im zweiten Innenraum (18) um eine Betätigungsachse (A) drehbar untergebracht ist und mit dem Elektromotor (20) zum Drehen um die Betätigungsachse (A) verbunden ist; wobei die Spindel (15) mit dem Schraubenelement (21) verbunden ist, sodass auf eine Drehung des Schraubenelements (21) eine Verschiebung der Spindel (15) entlang der Betätigungsachse (A) folgt; wobei die Wand (19) eine Öffnung (22) aufweist und das Schraubenelement (21) an einem in die Öffnung (22) eingesetzten Verbindungselement (23) befestigt ist;
- ein Hauptdichtungselement (24), das an der Öffnung (22) und am Verbindungselement (23) befestigt ist und zum Verhindern des Durchtritts von Flüssigkeiten und Schmutz zwischen der Öffnung (22) und dem Verbindungselement (23) ausgelegt ist.

2. Vorrichtung (10) nach Anspruch 1, **dadurch gekennzeichnet, dass** das Gehäuse (16) eine Öffnung (25) aufweist, welche den zweiten Innenraum (18) mit der Außenseite des Gehäuses (16) verbindet; wobei sich die Spindel (15) durch die Öffnung (25) erstreckt; wobei die Vorrichtung (10) ein sekundäres Dichtungselement (26) aufweist, das in der Öffnung (25) untergebracht ist und mit der Spindel (15) verbunden ist, wobei das sekundäre Dichtungselement (26) zum Verhindern des Eindringens von Flüssigkeiten und Schmutz durch die Öffnung (25) in den zweiten Innenraum (18) dient.

3. Vorrichtung (10) nach einem der vorhergehenden Ansprüche, **dadurch gekennzeichnet, dass** die Spindel (15) aufweist:
- ein äußeres Ende (27), das zum kinematischen Verbinden mit der zumindest einen Lamelle (13) konfiguriert ist;
- ein inneres Ende (28), das mit einem Innengewindeelement (29) versehen ist, das mit dem Schraubenelement (21) verbunden ist, sodass eine Drehung des Schraubenelements (21) zu einer Verschiebung der Spindel (15) führt;
- einen Schieber (30), der mit dem zweiten Innenraum (18) verbunden ist, sodass der Schieber (30) entlang der Betätigungsachse (A) verschiebbar ist und dessen Drehung um die Betätigungsachse (A) unterbunden ist.

4. Vorrichtung (10) nach einem der vorhergehenden Ansprüche, **dadurch gekennzeichnet, dass** die Spindel (15) eine Auskleidung (31) umfasst, die einen inneren Hohlraum umschließt, in den das Schraubenelement (21) verschiebbar eingesetzt ist.

5. Vorrichtung (10) nach einem der vorhergehenden Ansprüche, **dadurch gekennzeichnet, dass** der Innenraum (17) umfasst:
- eine erste Kammer (32), die sich in einer Richtung parallel zur Betätigungsachse (A) erstreckt, längsseits des zweiten Innenraums (18) angeordnet ist und den Elektromotor (20) aufnimmt;
- eine zweite Kammer (33), die sich senkrecht zur Betätigungsachse (A) erstreckt, mit der ersten Kammer (32) und mit dem zweiten Innenraum (18) über die Öffnung (22) in Verbindung steht, wobei die Vorrichtung 10 ein mechanisches Getriebe (34) aufweist, das in der zweiten Kammer (33) untergebracht ist und mit dem Elektromotor (20) und dem Schraubenelement (21) zum Übertragen einer Bewegung vom Elektromotor (20) auf das Schraubenelement (21) verbunden ist.

6. Vorrichtung (10) nach einem der vorhergehenden Ansprüche, **dadurch gekennzeichnet, dass** diese ein Lager (35) mit einem in der Öffnung (22) befestigten Außenelement (35a) und einem am Schraubenelement (21) befestigten Innenelement (35b) aufweist; wobei das Innenelement (35b) gegenüber dem Außenelement (35a) um die Betätigungsachse (A) drehbar ist.

7. Vorrichtung (10) nach Anspruch 6, **dadurch gekennzeichnet, dass** das Lager (35) längsseits des Hauptdichtungselements (24) angeordnet ist, wobei das Verbindungselement (23) einen Anschluss einer Welle (36) bildet, die sich entlang der Betätigungsachse (A) erstreckt und mit dem Innenelement (35b) zum drehbaren Führen um die Betätigungsachse (A) verbunden ist.

## Revendications

1. Dispositif (10) avec des lamelles (13) réglables pour recouvrir des surfaces extérieures de bâtiments, ledit dispositif comprenant :
- un cadre (11) qui peut être fixé à une surface (12) d'une paroi (19) d'un bâtiment ;
- une série de lamelles (13), s'étendant chacune le long d'un axe longitudinal et fixées de manière rotative audit cadre (11) autour dudit axe longitudinal ;
- un actionneur linéaire (14) ayant une broche (15) reliée à au moins une lamelle (13) desdites lamelles (13) ; ledit actionneur linéaire (14) pouvant fonctionner de sorte à faire tourner ladite au moins une lamelle (13) autour de son propre axe longitudinal ; **caractérisé en ce que** ledit actionneur linéaire (14) comprend :
- un boîtier (16) ayant à l'intérieur un premier compartiment (17) et un second compartiment (18) séparés l'un de l'autre par une paroi (19) ;
- un moteur électrique (20) logé dans ledit premier compartiment (17) ;
- un organe de vis (21) logé de manière rotative dans ledit second compartiment (18) autour d'un axe de fonctionnement (A) et relié audit moteur électrique (20) de sorte à tourner autour dudit axe de fonctionnement (A) ; ladite broche (15) étant reliée audit organe de vis (21) de sorte qu'une rotation dudit organe de vis (21) soit suivie par une translation de ladite broche (15) le long dudit axe de fonctionnement (A) ; ladite paroi (19) ayant un trou (22) et ledit organe de vis (21) étant fixé à un connecteur (23) inséré dans ledit trou (22) ;
- un élément d'étanchéité principal (24) fixé audit trou (22) et audit connecteur (23) et conçu de sorte à empêcher le passage de liquides et de saletés entre ledit trou (22) et ledit connecteur (23).

2. Dispositif (10) selon la revendication 1, **caractérisé en ce que** ledit boîtier (16) a une ouverture (25) qui place ledit second compartiment (18) en communication avec l'extérieur dudit boîtier (16) ; ladite broche (15) s'étendant à travers ladite ouverture (25) ; ledit dispositif (10) comprenant un élément d'étanchéité secondaire (26) logé dans ladite ouverture (25) et couplé à ladite broche (15), ledit élément d'étanchéité secondaire (26) servant à empêcher l'entrée de liquides et de saletés dans ledit second compartiment (18) à travers ladite ouverture (25).

3. Dispositif (10) selon l'une quelconque des revendications précédentes, **caractérisé en ce que** ladite broche (15) a :
- une extrémité extérieure (27) configurée pour être reliée de manière cinématique à ladite au moins une lamelle (13) ;
- une extrémité intérieure (28) pourvue d'un élément de vis femelle (29) couplé audit organe de vis (21) de sorte qu'une rotation dudit organe de vis (21) entraîne une translation de ladite broche (15) ;
- un curseur (30) couplé audit second compartiment (18) de sorte que ledit curseur (30) puisse coulisser le long dudit axe de fonctionnement (A) et que sa rotation autour dudit axe de fonctionnement (A) soit empêchée.

4. Dispositif (10) selon l'une quelconque des revendications précédentes, **caractérisé en ce que** ladite broche (15) comprend une chemise (31) qui renferme une cavité intérieure dans laquelle ledit organe de vis (21) est inséré de manière coulissante.

5. Dispositif (10) selon l'une quelconque des revendications précédentes, **caractérisé en ce que** ledit compartiment (17) comprend :
- une première chambre (32) qui s'étend dans une direction parallèle audit axe de fonctionnement (A), est située le long dudit second compartiment (18) et reçoit ledit moteur électrique (20) ;
- une seconde chambre (33) qui s'étend perpendiculairement audit axe de fonctionnement (A), est en communication avec ladite première chambre (32) et avec ledit second compartiment (18) au moyen dudit trou (22) ;
ledit dispositif 10 comprenant une transmission mécanique (34) logée dans ladite seconde chambre (33) et reliée audit moteur électrique (20) et audit organe de vis (21) afin de transmettre un mouvement dudit moteur électrique (20) audit organe de vis (21).

6. Dispositif (10) selon l'une quelconque des revendications précédentes, **caractérisé en ce qu'**il comprend un palier (35) ayant un élément extérieur (35a) fixé à l'intérieur dudit trou (22) et un élément intérieur (35b) fixé audit organe de vis (21) ; ledit élément intérieur (35b) pouvant tourner par rapport audit élément extérieur (35a) autour dudit axe de fonctionnement (A).

7. Dispositif (10) selon la revendication 6, **caractérisé en ce que** ledit palier (35) est situé le long dudit élément d'étanchéité principal (24), ledit connecteur (23) formant une borne d'un arbre (36) qui s'étend le long dudit axe de fonctionnement (A) et est relié audit élément intérieur (35b) afin d'être guidé en rotation autour dudit axe de fonctionnement (A).
